# EUROPÄISCHE PATENTSCHRIFT

(11) **EP 2 781 280 B1**
(45) Veröffentlichungstag und Bekanntmachung des Hinweises auf die Patenterteilung: **15.02.2017**
(21) Anmeldenummer: 14000816.0
(22) Anmeldetag: 07.03.2014
(51) Int. Cl.: B21K 25/00, B21J 15/00, B21J 15/12, B21D 39/03, F16D 1/072, F16H 57/08

(54) **Verfahren zur Herstellung einer Stauchniet-Verbindung mit einer rotativen Pendelbewegung**
Method for producing an upset rivet connection with a rotating oscillating motion
Procédé de fabrication d'une liaison rivetée refoulée avec un mouvement pendulaire rotatif

(30) Priorität: 22.03.2013 DE 102013004960
(43) Veröffentlichungstag der Anmeldung: 24.09.2014
(73) Patentinhaber: WEBO Werkzeugbau Oberschwaben GmbH, 88279 Amtzell (DE)
(72) Erfinder: Straub, Anton, 88273 Fronreute/ Blitzenreute (DE)
(74) Vertreter: Riebling, Peter

(56) Entgegenhaltungen:
- WO-A1-2012/152245
- DE-A1-102011 011 438

## Beschreibung

Gegenstand der Erfindung ist ein Verfahren zur Herstellung einer Stauchniet-Verbindung mithilfe einer rotativen Pendelbewegung nach dem Oberbegriff des Patentanspruches 1.

Ein solcher Gegenstand ist mit der auf den gleichen Anmelder zurückgehenden DE 10 2011 011 438 A1 bekannt geworden.

Bei der genannten Druckschrift wird eine Stauchniet-Verbindung mithilfe einer Pendelbewegung an einem metallischen Bauteil hergestellt. Das metallische Bauteil besteht aus einem topfförmigen Unterteil/Werkstück, das mit einem plattenförmigen Oberteil dadurch verbunden wird, dass am topfförmigen Unterteil am Umfang verteilt angeordnete Bogenstege angeformt sind, die in zugeordnete Bogenschlitze im plattenförmigen Oberteil eingreifen und dort mit dem Stauchniet-Verfahren und unter Einsatz von Umformrollen im Sinn einer Aufweitung umgeformt werden. Damit erfolgt eine kraft- und formschlüssige Anlage der umgeformten Bogenstege in den Bogenschlitzen.

Die durch die Bogenschlitze hindurchgreifenden, unverformten Bogenstege des Unterteils werden demnach unter der Andruckkraft von Umformrollen in einen Kaltfließzustand gebracht und dadurch so aufgeweitet, dass sie sich kraft- und formschlüssig an die Seitenwände der Bogenschlitze im plattenförmigen Oberteil anlegen. Dadurch wird die genannte Stauchniet-Verbindung hergestellt.

Nachteil des bekannten Verfahrens ist jedoch, dass eine rotative Pendelbewegung auf das Umformwerkzeug eingebracht werden muss. Das Umformwerkzeug nach dieser Druckschrift besteht im Wesentlichen aus einer Rollenaufnahme, in der mehrere, am Umfang verteilt angeordnete Umformrollen vorhanden sind. Das Umformwerkzeug wird von einem eine Pendelbewegung ausübenden Antriebswerkzeug drehend angetrieben. Gleichzeitig ist bei dem bekannten Verfahren erforderlich, dass auf das Umformwerkzeug auch die zur Umformung notwendige Andruckkraft auf die Umformrollen ausgeübt wird, um somit das Umformwerkzeug unter gleichzeitiger Aufbringung einer Pendelbewegung und Andruckkraft für die Herstellung der Stauchniet-Verbindung zu verwenden.

Weiterer Nachteil des bekannten Stauchniet-Verfahrens ist, dass die Einstellung der Pendelbewegung stark eingeschränkt ist, denn die Pendelbewegung wird über einen Kurbeltrieb aufgebracht, was eine bestimmte Amplitude und einen bestimmten Drehwinkel voraussetzt, der im Wesentlichen nicht veränderbar ist.

Im Oberbegriff des geltenden Anspruches 1 wird vom Gegenstand der DE 10 2012 206 678 A1 ausgegangen.

Diese Druckschrift zeigt bereits eine Steckverbindung zur drehschlüssigen Verbindung eines ersten Bauteils mit einem zweiten Bauteil, insbesondere in einem Kupplungsaggregat, wobei das erste Bauteil wenigstens ein als Bogensteg ausgebildetes Verbindungselement aufweist, der durch eine schlitzförmige Öffnung im zweiten Bauteil ragt. Der durch den Schlitz des zweiten Bauteils ragende Bogensteg des ersten Bauteils wird mit dem zweiten Bauteil durch ein Rollumformverfahren verbunden.

Hierzu ist vorgesehen, dass das erste und zweite Bauteil auf einer drehend oszillierend angetriebenen und gleichzeitig in axialer Richtung bewegbaren Vorschubeinheit angeordnet sind, die in der Lage ist, die beiden ineinander gesteckten Bauteile gegen fest in einem Halter angeordnete, zylindrische Umformrollen zu pressen.

Die zylindrischen Umformrollen wälzen sich demnach oszillierend im Uhrzeigersinn und im Uhrzeigergegensinn über einen Winkelbereich von z. B. von 90 oder 180 Grad bezogen auf die Umfangsrichtung der Rollvorrichtung ab, so dass jeder Bogensteg mehrmals über die drehbar gelagerten, zylindrischen Umformrollen gerollt wird und durch die als zylindrische Walze ausgebildete Umformrolle ein Fliesspress-Druck auf die Bogenstege ausgeübt wird, so dass die Bogenstege Stück für Stück niedergedrückt und verbreitert werden und damit eine rollumgeformte Verbindung zwischen dem ersten und zweiten Bauteil stattfindet.

Das Niederdrücken der Bogenstege kann im Bereich von einigen mm liegen. Der Vorschub der zylindrischen Umformwalzen in Z-Richtung kann etwa 1/10 mm pro Umdrehung betragen [0044]

Die zylindrischen Walzen werden demnach viele Male, beispielsweise zehn Mal oder einige einhundert Mal über den jeweiligen Bogensteg gerollt, so dass sich dieser pilzförmig verbreitert und mit seinen Seitenflächen an den die Ausnehmung im zweiten Bauteil begrenzenden Rändern anlegt.

Nachteil eines solchen Rollumformverfahren ist allerdings, dass beim vielfachen Überwalzen der Bogenstege deren beidseitige Ränder sich pilzförmig nach außen vergrößert auf der Oberseite im Randbereich der Ausnehmung des zweiten Bauteils ablegen und dort teilweise brechen oder absplittern. Es kommt demnach zu einer unkontrollierten Umformung der Bogenstege, bei der die Gefahr besteht, dass durch die pilzförmige Aufweitung der Bogenstege über die Ränder der Ausnehmung im zweiten Bauteil hinaus, nicht sichtbare Bruchlinien und unerwünschte kristalline Umformungen im Gefüge der Bogenstege entstehen, welche die Festigkeit der Rollumform-Verbindung beeinträchtigen. Eine solche rollumgeformte Verbindung kann demnach auch nicht durch Röntgen- oder Ultraschall-Untersuchung auf eine bruchfreie Qualität untersucht werden.

Die Bogenstege werden demnach sozusagen niedergewalzt, was mit dem Nachteil von Bruchlinien im Bereich der rollumgeformten Querschnitte der Bogenstege erkauft werden muss.

Der Erfindung liegt deshalb die Aufgabe zugrunde, ein Verfahren zur Herstellung einer Stauchniet-Verbindung so weiterzubilden, dass mit wesentlich höherer Genauigkeit und günstigeren Verfahrensparametern die Stauchniet-Verbindung zwischen einem topfförmigen Unterteil und einem plattenförmigen Oberteil hergestellt werden kann.

Zur Lösung der gestellten Aufgabe ist das Verfahren durch die technische Lehre des Anspruches 1 gekennzeichnet.

Im Unterschied zu dem groben Überwalzen der flächigen, lappenähnlichen Bogenstege nach der DE 10 2012 206 678 A1 sieht die Erfindung nun vor, dass anstatt der walzenförmigen oder zylindrischen Umformrollen nunmehr die verwendeten Umformrollen ein spitzwinkliges Profil aufweisen und die Pendelbewegung jeder Umformrolle mit einem bestimmten Pendelweg nicht über die Länge des Bogenstegs hinausgeht.

Dies bedeutet, dass die Länge des Bogenstegs in dessen Mittenbereich nur teilweise mit einer profilierten Umformrolle überfahren wird und dass die Umformrolle nicht über die Länge des Bogenstegs hinausrollt und die Pendelbewegung der Umformrolle immer im Bereich des Bogenstegs verbleibt.

Der Bogensteg wird demnach nicht überfahren und unter Aufpilzung platt gewalzt, sondern er wird durch eine spitzwinklig profilierte Umformrolle in seinem Mittenbereich jeweils zu den Seiten hin keilförmig auseinandergepresst und legt sich mit seinen im Fließumformverfahren umgeformten randseitigen Querschnitten an der Innenseite der Ausnehmung im anderen Bauteil an.

Unter dem Begriff einer "spitzwinklig" profilierten Umformrolle wird jedes symmetrische Keilprofil am Außenumfang der Umformrolle verstanden, das in der Lage ist, das Metallmaterial aus dem Mittenbereich des Bogensteges nach außen - zu den Randbereichen der Bogenstege - zu verdrängen. Ein solches symmetrisches Keilprofil kann folglich jeden Winkel aufweisen der kleiner als 180 Grad ist. Bevorzugt werden Keilwinkel im Bereich zwischen 160 bis 30 Grad. Besonders bevorzugt werden Keilwinkel im Bereich zwischen 40 bis 60 Grad. Statt des Begriffs "spitzwinklig" wird auch der Begriff "keilförmig" verwendet.

Im Rahmen der Erfindung können sowohl auf Achsen gelagerte Umformrollen, wie auch achslos gelagerte Umformrollen verwendet werden. Derartige, achslos gelagerte Umformrollen sind in einem Bett gelagert, welches z. B. aus Keramik besteht. Die achslose Umformrolle dreht sich in dem feststehenden Bett aus Keramikmaterial und ragt lediglich mit ihrem keilförmig profilierten Umfang aus dem Bett heraus, um mit diesem freistehenden Umfang auf den Bogensteg im Sinne eines Fliessumformverfahrens einzuwirken.

Die umgeformten Bogenstege sollen deshalb nicht über die Oberfläche des anderen Bauteils hinausragen, weil sich andernfalls bruchgefährdete und von Absplitterung bedrohte Querschnitte der Bogenstege absetzen könnten.

Vielmehr sieht die Erfindung vor, dass sich diese, im Fließumformverfahren keilförmig im Stirnbereich verformten Bogenstege nur an der Innenseite der Ausnehmung, d. h. im Bogenschlitz des zweiten Bauteils anlegen.

Dadurch, dass vermieden wird, dass Querschnitte der umgeformten Bogenstege sich außen und oberhalb der Oberfläche des V-förmigen Bogenschlitzes im anderen Bauteil absetzen, kann dort keine Absplitterung mehr erfolgen, und es ergeben sich auch keine unsichtbaren und nicht überprüfbaren Bruchlinien.

Weitere Merkmale der Erfindung sind Gegenstand der übrigen Unteransprüche.

Vorteilhaft ist, dass die Pendelbewegung auf das Werkstück aufgebracht wird und der Rollenkopf mit den dort angeordneten Umformrollen lediglich die Andruckkraft auf die Umformrollen und damit auf die umzuformenden Bogenstege des Unterteils erzeugt.

Bevorzugt wird ferner, dass die Pendelbewegung und die Aufbringung einer Pendelkraft, sowie die Erzeugung der Andruckkraft in zwei voneinander getrennten Bauteilen der verwendeten Vorrichtung stattfinden. Die Pendelkraft wird bevorzugt auf das - im Unterteil der Vorrichtung angeordnete - Werkstück aufgebracht, was mit dem Vorteil verbunden ist, dass das Werkstück mit geringem Aufwand pendelnd angetrieben werden kann, während dies beim Rollenkopf und dem Oberteil der Vorrichtung sehr viel schwieriger ist.

Die Pendelkraft auf das Werkstück wird vorzugsweise über eine Klemmvorrichtung eingeleitet, die das Werkstück form- und kraftschlüssig aufnimmt. Teil der Klemmvorrichtung ist eine Zentriervorrichtung mit Mitnahmebacken. Jeder der Mitnahmebacken weist einen formschlüssige Konturverlauf, die mit einer am Werkstück radial nach außen gerichteten Gegenkontur im Eingriff ist, sodass durch den Kontureingriff des Klemmwerkzeuges mit dem Werkstück das Klemmwerkzeug sehr leicht mit einer Pendelkraft beaufschlagt werden kann.

Die Zentriervorrichtung mit dem Klemmwerkzeug ist vorzugsweise auf einem Drehteller befestigt, der einen nach außen gerichteten Antriebszahnkranz aufweist, der mit einem zugeordneten Antriebszahnrad eines Getriebemotors kämmt.

Mit dieser Anordnung kann die Pendelbewegung in weiten Grenzen verändert werden, denn der Getriebemotor führt eine Pendelbewegung aus, die in ihrer Länge und/oder Amplitude frei einstellbar (programmierbar) ist. Es kann also eine Pendelbewegung theoretisch von 0 bis 360 Grad Drehwinkel eingestellt werden, was mit dem zum Stand der Technik gehörenden Kurbeltrieb nicht möglich war.

Weiterer Vorteil der Erfindung ist, dass auf die Rollenaufnahme, welche die Umformrollen für die Verformung der Bogenstege des Werkstückes trägt, ein einfach zu beherrschender Antrieb wie z.B. Hydraulik oder Kugelrollspindel wirkt, die in ihrer Andruckkraft genau einstellbar ist. Demnach können über sehr einfache Einstellmittel die Andruckkraft und der Andruckweg eines solches Antriebs genau eingestellt werden, was zu einer Vereinfachung und einer Verbesserung der Genauigkeit der verwendeten Vorrichtung führt.

Bei der Vorrichtung nach dem Stand der Technik (DE 10 2011 011 438 A1) war lediglich bekannt, mit einem Hydraulikzylinder auf die Rollenaufnahme zu drücken, wodurch zwar die Andruckkraft einstellbar war, jedoch nicht der Andruckweg.

Hier setzt die Erfindung ein, die einen sogenannten verrollbaren Antrieb verwendet, bei der sowohl der Andruckweg als auch die Andruckkraft fein einstellbar sind und demzufolge eine wesentlich bessere Genauigkeit des Verfahrens gegeben ist.

Eine definierte Veränderung der Pendelkraft in Z-Richtung (das ist die Drehkraft, mit der die Pendelvorrichtung angetrieben wird) wird mit der Andruckkraft in X-Richtung koordiniert.

Es wurde nämlich erkannt, dass die Pendelkraft in Z-Richtung beim Start der Pendelbewegung relativ klein sein muss und dann stark ansteigt, wobei die Maximalkraft während des Fließpressens in Z-Richtung erzeugt wird und kurz vor dem Erreichen des Endes des Bogensteges die Pendelkraft wieder abnimmt, um das Ende des Bogensteges nicht so stark zu verformen wie vergleichsweise den mittleren Bereich des Bogensteges.

Diese Pendelkraft wird über den Drehwinkel gesteuert. Dies war beim Stand der Technik nicht bekannt.

Gleiches gilt für die Erzeugung der Andruckkraft in X-Richtung, welche vom Rollenkopf auf die Umformrollen wirkt, weil hier ebenfalls ausgehend von einer relativ geringen Andruckkraft im Stillstand die Umformkraft in X-Richtung sehr schnell ansteigt, was dadurch erfolgt, dass die Umformrolle zunächst einmal in das Material des Bogensteges eingedrückt wird und dann, dass während der Pendelbewegung die Druckkraft relativ gleich bleibt und vor Beendigung der Pendelbewegung die Druckkraft wieder abnimmt und in einem niedrigen Wert endet.

Im Folgenden wird eine Vorrichtung zur Durchführung der Erfindung anhand von lediglich einen Ausführungsweg darstellenden Zeichnungen näher erläutert. Hierbei gehen aus den Zeichnungen und ihrer Beschreibung weitere Merkmale und Vorteile der Erfindung hervor.

Es zeigen:
Figur 1: schematisiert in Seitenansicht eine Stauchniet-Umformung zwischen einem topfförmigen Unterteil eines Werkstückes, welches mit Bogenstegen durch Bogenschlitze eines etwa plattenförmigen Oberteils hindurch greift.
Figur 2: die perspektivische Ansicht des Werkstückes nach Figur 1 mit Darstellung des Klemmwerkzeuges.
Figur 3: Schnitt durch eine Vorrichtung zur Durchführung der Erfindung im geöffneten Zustand.
Figur 4: die Draufsicht auf die Vorrichtung nach Figur 3.
Figur 5: vergrößerter Schnitt durch das Werkstück und die Umformrollen.
Figur 6: ein schematisierter Schnitt, stark vergrößert, durch den Rollenkopf einer Umformrolle während des Verformens des Bogensteges in den Bogenschlitz hinein.
Figur 7: schematisiert der Rollumformvorgang in der Art der Zeichnung nach Figur 6
Figur 8: die Seitenansicht auf die Darstellung in Figur 7
Figur 9: die Draufsicht auf die Anordnung nach Figur 8

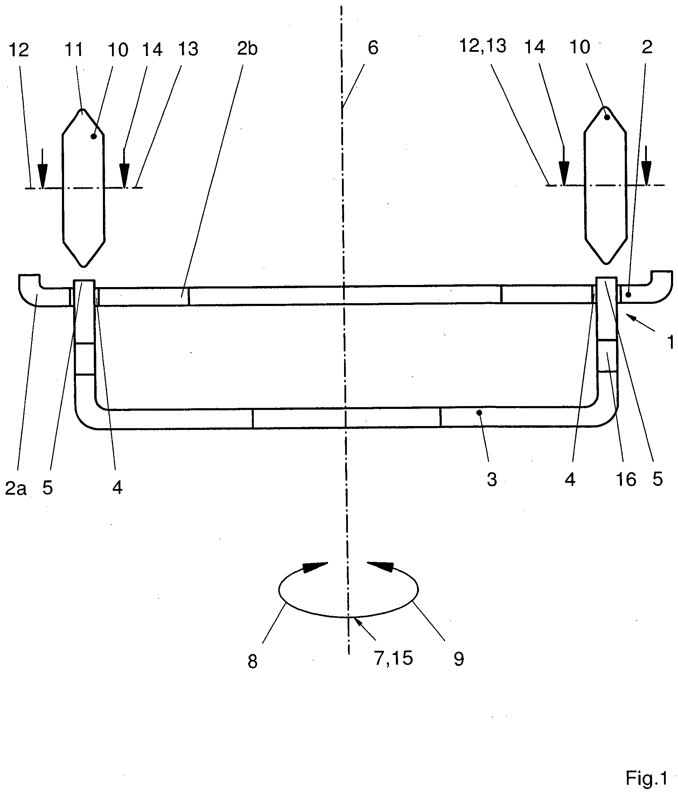

In Figur 1 ist allgemein ein Werkstück 1 dargestellt, welches im Wesentlichen aus einem Oberteil 2 besteht, das mit einem Unterteil 3 über mehrere, gleichmäßig am Umfang verteilt angeordnete Stauchniet-Verbindungen verbunden werden soll. Das Oberteil 2 besteht im Wesentlichen aus einem etwa napfförmigen Plattenteil 2b, das einen schräg nach außen gerichteten Rand 2a aufweist.

Das Unterteil 3 ist im Wesentlichen topfförmig ausgebildet und weist eine im Boden angeordnete zentrale Ausnehmung auf, sowie ein oder mehrere, gleichmäßig am Umfang verteilt angeordnete, radial nach außen gerichtete Ausnehmungen 16.

Die vertikal nach oben gerichteten Wände des topfförmigen Unterteils 3 sind als Bogenstege 5 ausgebildet, die sich über einen bestimmten Winkel von 30 Grad als Bogenstege 5 durch zugeordnete Bogenschlitze 4 im Bereich des Plattenteils 2b des Oberteils 2 hindurch erstrecken.

Im unverformten Zustand ragen die Bogenstege 5 etwa 0,5 mm über die Oberseite des Plattenteils 2b des Oberteils 2 hinaus.

Die in Figur 1 lediglich schematisiert dargestellte Stauchniet-Verbindung wird dadurch hergestellt, dass mithilfe von jedem Bogenschlitz 4 zugeordneten Umformrollen 10, die gleichmäßig verteilt am Umfang einer Rollenaufnahme 12 angeordnet sind, eine Fließpresskraft auf die Oberseite des Bogensteges 5 des Unterteils 3 ausgeübt wird. Dadurch verformen sich die Bogenstege 5 radial einwärts und auswärts und legen sich form- und kraftschlüssig an die Seitenwände des Bogenschlitzes 4 im Oberteil 2 an.

Zu diesem Zweck wird auf jede der Umformrollen 10 eine geeignete Andruckkraft 14 ausgeübt, sodass jede Umformrolle 10 mit der gleichen Andruckkraft 14 mit ihrem Rollenkopf 11, der etwa kegelförmig ausgebildet ist, gegen die Stirnseite des Bogensteges 5 gepresst wird.

Die Erfindung sieht vor, dass das Werkstück 1 in einem später noch zu erläuternden Klemmwerkzeug 17 kraft- und formschlüssig gehalten ist und in seiner Drehachse 6 einer Pendelbewegung 7 in den Pfeilrichtungen 8, 9 ausgesetzt wird, wobei die Pendelbewegung 7 mit einer bestimmten rotativen Pendelkraft 15 erfolgt.

Ferner ist jede Umformrolle 10 drehbar in der zugeordneten Rollenaufnahme 12 gelagert, wobei die Umformrollen 10 nicht drehend angetrieben sind. Sie sind demnach nur drehbar gelagert, nicht aber drehend angetrieben.

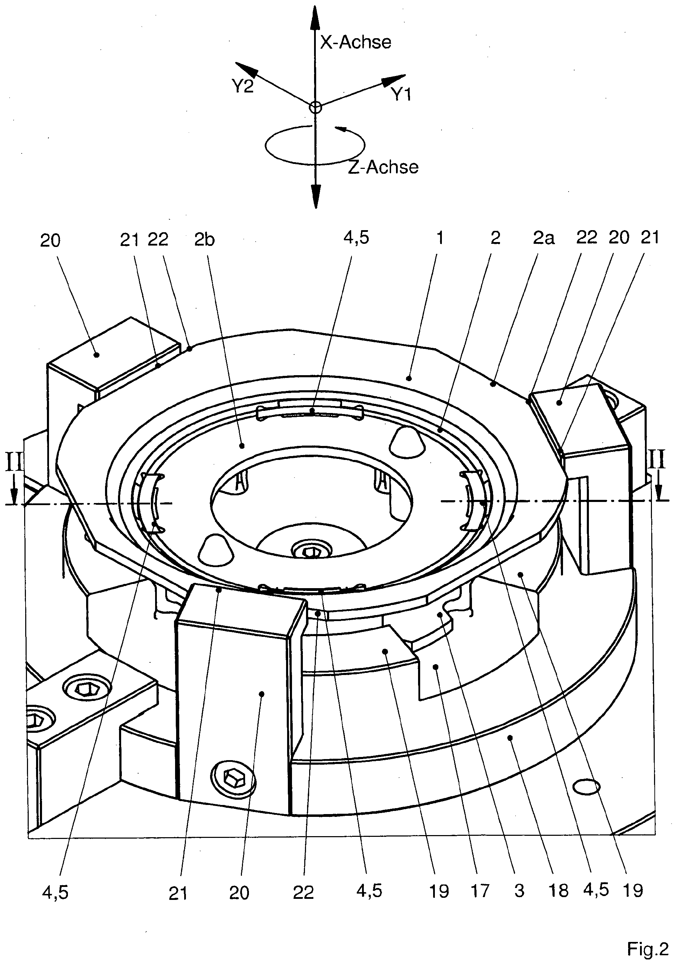

Die Figur 2 zeigt weitere Einzelheiten der Einspannung des Werkstückes 1 in einem zugeordneten Klemmwerkzeug 17. Das Klemmwerkzeug 17 besteht im Wesentlichen aus einer Zentrierscheibe 18, auf der eine Anzahl von gleichmäßig am Umfang verteilt angeordneten Mitnahmebacken 20 angeordnet ist. Jede Mitnahmebacke 20 weist eine radial nach innen gerichtete Kontur 21 auf, die mit einer zugeordneten, am Oberteil 2 im Bereich des Randes 2a des Werkstücks 1 angeordneten Kontur in Formschluss ist.

Damit wird das Werkstück 1 spielfrei und formschlüssig im Klemmwerkzeug 17 gehalten.

Ferner ist das Unterteil 3 des Werkstückes 1 durch Klemmbacken 19 gehalten und zentriert, die sich formschlüssig an der Außenwandung des Unterteils 3 anlegen.

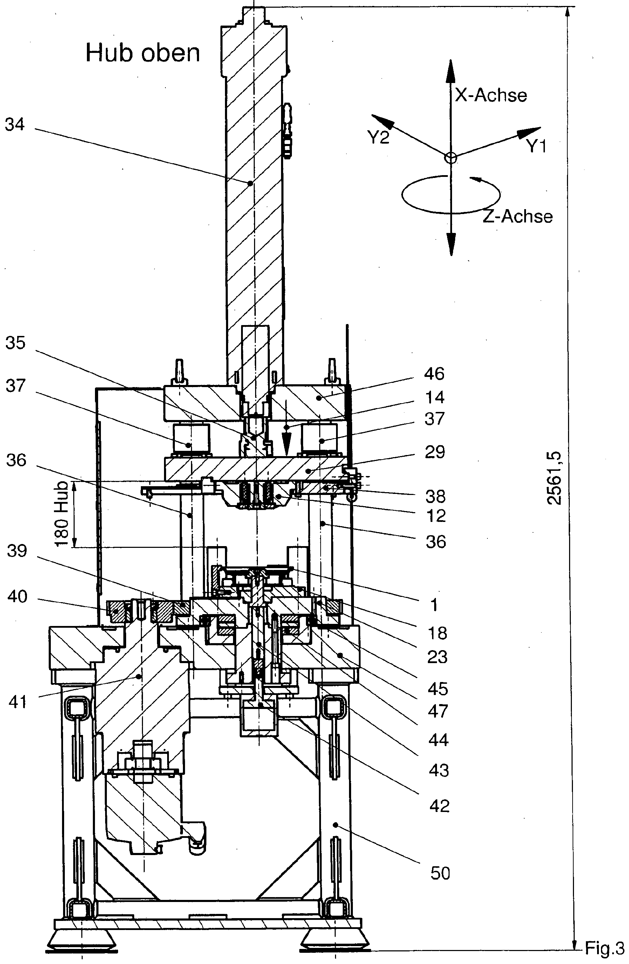

Gemäß Figur 3 sitzt die Zentrierscheibe 18 auf der Oberseite eines Drehtellers 23 auf, der mit seinem Außenumfang mit einem Zahnkranz 39 verbunden ist, dessen nach außen gerichtete Verzahnung mit einem zugeordneten Antriebszahnrad 40 in Verzahnungseingriff steht, wobei das Antriebszahnrad 40 drehfest mit der Antriebswelle eines Getriebemotors 41 verbunden ist. Der Getriebemotor 41 führt die Pendelbewegung 7 in den Pfeilrichtungen 8, 9 auf den Drehteller 23 aus. Nachdem er als Getriebemotor 41 ausgebildet ist, kann er die Pendelkraft 15 mit einem hohen Drehmoment über eine frei einstellbare Winkelstrecke erzeugen.

Das Oberteil der Vorrichtung besteht im Wesentlichen aus einer Kugelrollspindel 34, die gemäß den weiteren Teilen in Figur 3 auf einer Kopfplatte 46 befestigt ist und mit einem Druckstößel 35 auf die Oberseite einer Stößelplatte 29 wirkt.

Die Stößelplatte ist in der Art eines Hubgestells mithilfe von Führungsbuchsen 37 verschiebbar in den feststehenden Säulen 36 gelagert. Die Führungssäulen 36 sind in der Kopfplatte 46 befestigt.

An der Unterseite der Stößelplatte 29 ist die Rollenaufnahme 12 angeordnet, in der die Umformrollen 10 gleichmäßig verteilt am Umfang angeordnet sind.

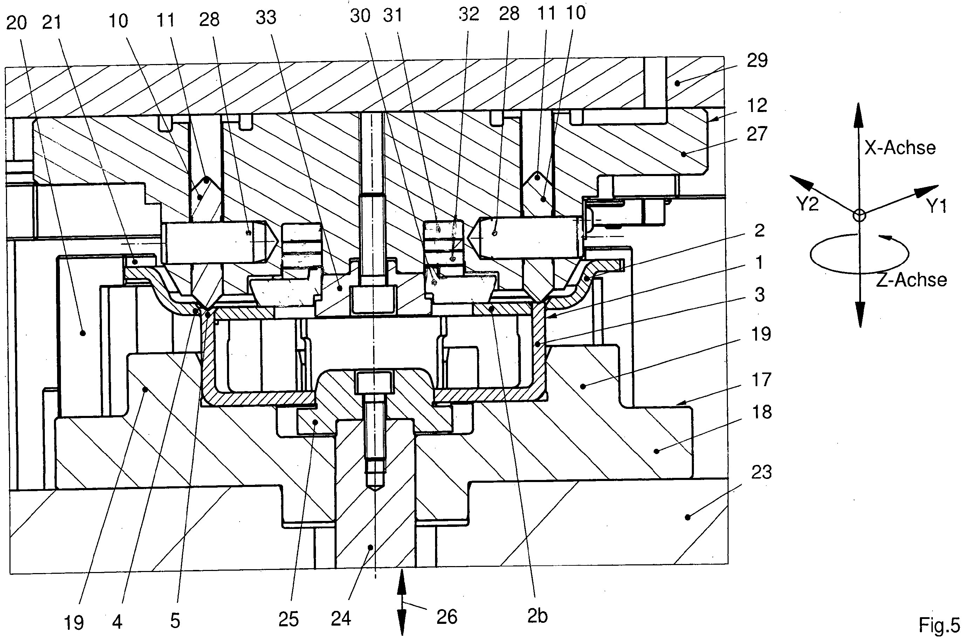

Im Unterteil der Vorrichtung ist ein Pneumatikzylinder 42 angeordnet, dessen Kolbenstange einen Hubbolzen 43 heb- und senkbar antreibt, der in der Art eines Auswerfers das Bauteil aus der Zentrierung heraushebt, wie später anhand der Figur 5 noch erläutert werden wird.

Aus Figur 3 ist entnehmbar, dass der Drehteller 23 mithilfe von am Umfang angeordneten Radiallagern 45 und einem Axiallager 44 drehbar im Unterteil der Vorrichtung gelagert ist.

Das Unterteil der Vorrichtung wird im Übrigen in einem auf dem Boden aufgestellten Grundgestell 50 gehalten.

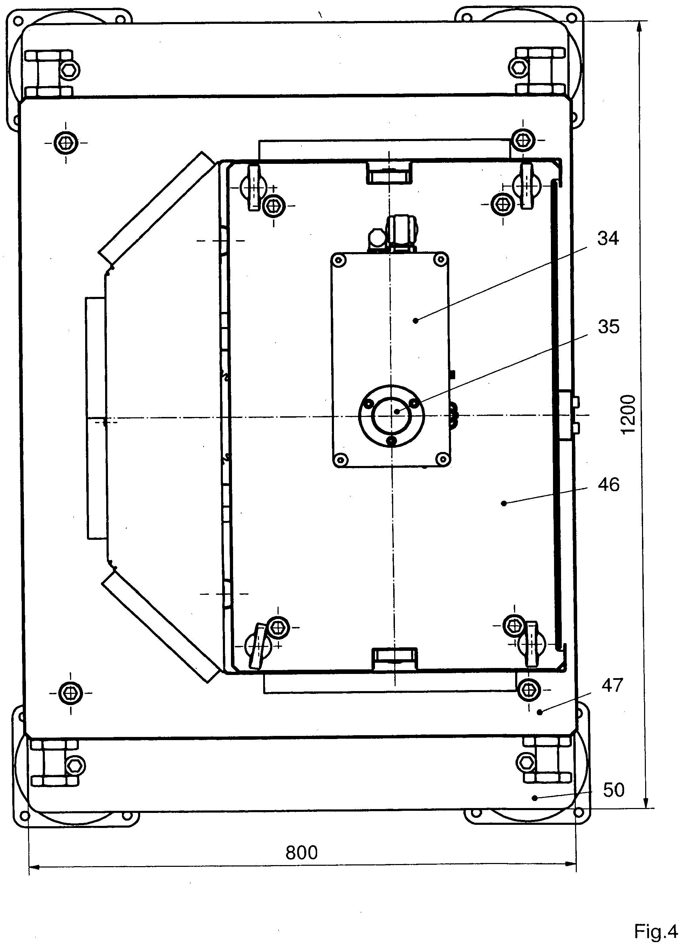

Die Rollenaufnahme 12 wird in einer Halteplatte 38 im Oberteil gehalten. Die Figur 4 zeigt die Draufsicht auf die Vorrichtung, wo die gleichen Teile nach Figur 3 mit den gleichen Bezugszeichen bezeichnet sind. Hier ist erkennbar, dass die Kugelrollspindel 34 oberhalb einer Kopfplatte 46 angeordnet ist, und die Kopfplatte 46 über einer größer ausgebildeten Grundplatte 47 angeordnet ist.

Aus Figur 5 lassen sich die weiteren Einzelteile des Umformteils der Vorrichtung entnehmen.

Im Unterteil ist der Zentrierbolzen 24 mit dem Hubbolzen 43 nach Figur 3 verbunden und die Oberseite des Zentrierbolzens 24 ist mit einer Zentrierscheibe 25 verbunden, die in die Mittenaufnahme des Unterteils 3 formschlüssig eingreift und das Unterteil zentriert.

Der Zentrierbolzen 24 ist über den Hubantrieb des Pneumatikzylinders 42 in den Pfeilrichtungen 26 heb- und senkbar angetrieben, um bei geöffnetem Oberteil (siehe Figur 3) das Werkstück 1 aus dem Unterteil herauszuheben.

Im Oberteil der Vorrichtung ist die Rollenaufnahme 12 durch einen Plattenkörper 27 gebildet, die mehrere schlitzförmige Aufnahmen für die Aufnahme von mehreren, gleichmäßig am Umfang verteilt angeordneten Umformrollen 10 aufweist. Jede Umformrolle 10 ist drehbar auf einem Lagerbolzen 28 gelagert.

Zur Zentrierung des Oberteils 2 des Werkstückes 1 ist vorgesehen, dass im Mittenbereich des Plattenkörpers 27 eine Haltescheibe 33 mithilfe einer Gewindeschraube in die obere Mittenausnehmung im Plattenteil 2b des Werkstückes 1 eingreift und dort eine federnde Haltekraft dadurch erzeugt wird, dass auf die Oberseite des Plattenteils 2b des Werkstücks 1 eine Andrückscheibe 30 aufdrückt, die mithilfe von am Umfang verteilt angeordneten Tellerfedern 31 eine federnde Andruckkraft auf die Andrückscheibe 30 erzeugt. Die Andrückscheibe 30 ist über ein Axiallager 32 drehbar zu der feststehenden Haltescheibe 33 gelagert.

Auf diese Weise kann die rotative Pendelbewegung, die auf das Unterteil 3 des Werkstückes 1 eingeleitet wird, auf die Andrückscheibe 30 übertragen werden, die damit in Bezug zur feststehenden Rollenaufnahme 12 drehbar gelagert ist.

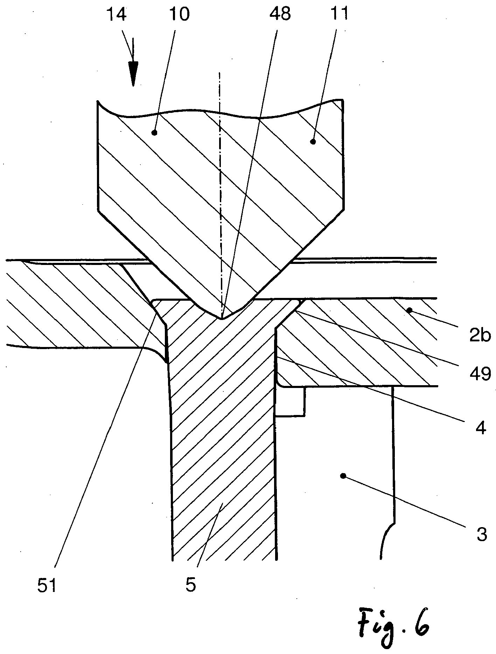

In Figur 6 ist der Stauchniet-Vorgang in stark vergrößerter Darstellung gezeigt. Es ist erkennbar, dass der Rollenkopf 11 jeder Umformrolle eine etwa kegelförmige Kontur 48 aufweist. Die genaue Formgebung der Kontur 48 hängen vom Material des Bogensteges 5 des Unterteils 3 ab, sowie von der Andruckkraft 14 und der Pendelkraft 15. Ferner ist der Umformvorgang abhängig von den Anforderungen an die Festigkeit der Stauchniet-Verbindung, die durch einen Kaltfließvorgang des Bogensteges 5 erfolgt, der in der Art eines Umformwulstes 49 radial (gemäß Figur 6) auf beiden Seiten des Rollenkopfes 11 verdrängt wird und sich in eine zugeordnete kegelförmige Anfasung 51 im Bereich des Bogenschlitzes 4 einpresst.

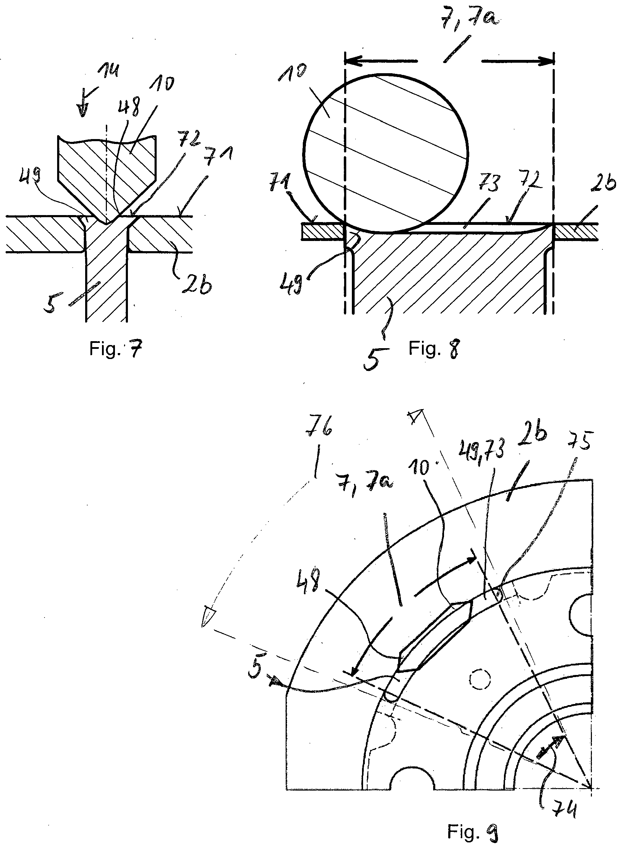

Die Figur 7 zeigt die gleichen Teile wie in Figur 6 gezeigt. Aus Figur 7 ist entnehmbar, dass der im Rollumformverfahren hergestellte Umformwulst 49 im Kopfbereich des Bogensteges 5 mit seiner Oberfläche 72 annähernd bündig mit der Oberfläche 71 des angrenzenden Bauteils 2b ist.

Ferner ist erkennbar, dass die spitzwinklige Kontur 48 der Umformrollen 10 sich etwa in dem Mittenbereich des Bogensteges 5 eingräbt und im Fließpressverfahren das im Stirnseitenbereich des Bogensteges 5 angeordnete Metallmaterial in die etwa keilförmige, angefaste (Anfasung 51 gemäß Figur 6) Aufnahme im Plattenteil 2b verdrängt.

In Figur 8 ist erkennbar, dass die spitzwinklige Kontur 48 der Umformrolle 10 sich in einer vertieften Umformfläche 73 entlang über die Länge des Bogensteges 5 bewegt, so dass eine im Mittenbereich der Stirnseite des Bogensteges 5 vertiefte Umformfläche 73 angebracht wird, die nach ihren Seiten hin ansteigt und somit eine bündige Oberfläche 72 zu der angrenzenden Oberfläche 71 des angrenzenden Bauteils 2b bildet.

Die Figur 9 zeigt den Weg 7a der Pendelbewegung 7 der Umformrolle 10 und gleichzeitig ist die Länge 76 des Bogensteges 5 angegeben.

Damit wird klar, dass die Länge 76 des Bogensteges 5 kleiner ist als der Pendelweg 7a, weil noch Restwege 75 links und rechts übrig bleiben.

Der Winkelbereich 74, den der Pendelweg 7a beschreibt, ist also kleiner als die tatsächliche Winkelerstreckung des Bogensteges 5.

### Zeichnungslegende

- 1: Werkstück
- 2: Oberteil (2a Rand, 2b Plattenteil)
- 3: Unterteil
- 4: Bogenschlitz
- 5: Bogensteg
- 6: Drehachse
- 7: Pendelbewegung
- 7a: Pendelweg
- 8: Pfeilrichtung
- 9: Pfeilrichtung
- 10: Umformrolle
- 11: Rollenkopf
- 12: Rollenaufnahme
- 13: Drehachse
- 14: Andruckkraft
- 15: Pendelkraft
- 16: Ausnehmung
- 17: Klemmwerkzeug
- 18: Zentrierscheibe
- 19: Klemmbacke (unten)
- 20: Mitnahmebacke (oben)
- 21: Kontur
- 22: Außenkontur (von 1)
- 23: Drehteller
- 24: Zentrierbolzen
- 25: Zentrierscheibe
- 26: Pfeilrichtung
- 27: Plattenkörper
- 28: Lagerbolzen
- 29: Stößelplatte
- 30: Andrückscheibe
- 31: Tellerfeder
- 32: Axiallager
- 33: Haltescheibe
- 34: Kugelrollspindel
- 35: Druckstößel
- 36: Führungssäule
- 37: Führungsbuchse
- 38: Halteplatte
- 39: Zahnkranz
- 40: Antriebszahnrad
- 41: Getriebemotor
- 42: Pneumatikzylinder
- 43: Hubbolzen
- 44: Axiallager (für 23)
- 45: Radiallager (für 23)
- 46: Kopfplatte
- 47: Grundplatte
- 48: Kontur
- 49: Umformwulst
- 50: Grundgestell
- 51: Anfasung
- 52: Position
- 53: Pendelkraft (auf Umformrolle 10)
- 54: Pendelkraft (auf Zentriervorr. 18)
- 55: Pendelkraft (auf Werkstück 1)
- 56: Position
- 57: "
- 58: "
- 59: "
- 60: "
- 61 61: leer
- 62: leer
- 63: Andruckkraft (auf Umformrolle 10)
- 64: Andruckkraft auf 18
- 65: Andruckkraft auf 1
- 66: Position
- 67: "
- 68: "
- 69: "
- 70: "
- 71: Oberfläche (von 2b)
- 72: Oberfläche (von 49)
- 73: Umformfläche
- 74: Winkelbereich
- 75: Restweg
- 76: Länge von 5
- 65: Andruckkraft auf 1
- 66: Position
- 67: "
- 68: "
- 69: "
- 70: "
- 71: Oberfläche (von 2b)
- 72: Oberfläche (von 49)
- 73: Umformfläche
- 74: Winkelbereich
- 75: Restweg
- 76: Länge von 5

## Patentansprüche

1. Verfahren zur Herstellung einer Stauchniet-Verbindung mit einer rotativen Pendelbewegung zur Verbindung zweier metallischer Bauteile (1, 2, 3), wobei mittels Umformrollen (10) und deren Pendelbewegung eine senkrechte und gleichzeitig waagerechte Umformung durchgeführt wird, wobei das eine Bauteil (3) einen vorgeformten, flächigen lappenähnlichen Bogensteg (5) besitzt und das zweite Bauteil (2) einen Bogenschlitz (4) aufweist, welcher die Aufnahme des vorgeformten, flächigen lappenähnlichen Bogenstegs (5) ermöglicht, und die Umformrolle (10) durch radiale Pendelbewegung den Bogensteg (5) in den Bogenschlitz (4) mittels überlagerter axialer und rotativer Bewegung einprägt und dadurch eine formschlüssige Verbindung der beiden Bauteile (1, 2, 3) hergestellt wird, **dadurch gekennzeichnet, dass** der Außenumfang der Umformrollen (10) ein keilförmiges Profil (11, 48) aufweist und die Pendelbewegung (7) jeder Umformrolle (10) mit einem bestimmten Pendelweg (7a) über dem Bogensteg (5) nicht über die Länge (76) des Bogenstegs (5) hinaus geht.

2. Verfahren nach Anspruch 1, **dadurch gekennzeichnet, dass** der Pendelweg (7a) der profilierten Umformrolle (10) etwa 80 bis 95 % der Länge (76) des Bogenstegs (5) entspricht.

3. Verfahren nach Anspruch 1 oder 2, **dadurch gekennzeichnet, dass** die Oberfläche (73) des umgeformten Bogenstegs (5) einen Umformwulst (49) bildet, der über die Länge (76) des Bogenstegs (5) gesehen mindestens im mittleren Bereich der Länge (76) des Bogenstegs (5) vertieft ausgebildet ist und sich unterhalb der Oberfläche (71) des anschliessenden Bauteils (2) befindet.

4. Verfahren nach Anspruch 3, **dadurch gekennzeichnet, dass** sich die die in Umfangsrichtung an das anschliessende Bauteil (2) anschliessenden Oberflächen (72) des umgeformten Bogensteges (5) flächenbündig in die Oberfläche (71) des anschliessenden Bauteils (2) übergehen.

5. Verfahren nach einem der Ansprüche 1 bis 4, **dadurch gekennzeichnet, dass** die Pendelkraft auf das Werkstück (1, 2, 3) über ein Klemmwerkzeug (17) eingeleitet wird, die das Werkstück (1, 2, 3) form- und kraftschlüssig aufnimmt.

6. Verfahren nach einem der Ansprüche 1 bis 5, **dadurch gekennzeichnet, dass** eine definierte Veränderung der Pendelkraft in Z-Richtung (das ist die Drehkraft, mit der die Pendelvorrichtung angetrieben wird) mit der Andruckkraft in X-Richtung koordiniert wird.

7. Verfahren nach einem der Ansprüche 1 bis 6, **dadurch gekennzeichnet, dass** die Andruckkraft in X-Richtung, welche vom Rollenkopf (11) auf die Umformrollen (10) wirkt, ausgehend von einer geringen Andruckkraft im Stillstand in X-Richtung schnell ansteigt, sodass die Umformrolle (10) zunächst in das Material des Bogensteges (5) eingedrückt wird und dann während der Pendelbewegung die Druckkraft geregelt gleich bleibt.

## Claims

1. Method for producing an upset rivet connection with a rotary oscillating movement for connecting two metal components (1, 2, 3), wherein a vertical and simultaneously horizontal forming operation is carried out by means of forming rollers (10) and oscillating movement thereof, wherein the first component (3) has a pre-formed areal tab-like curved web (5) and the second component (2) has a curved slot (4) which allows the reception of the pre-formed areal tab-like curved web (5), and the forming roller (10) with a radial oscillating movement presses the curved web (5) into the curved slot (4) by means of overlaid axial and rotary movement, thereby producing a form-locking connection between the two components (1, 2, 3), **characterised in that** the external circumference of the forming rollers (10) has a wedge-shaped profile (11, 48) and the oscillating movement (7) of each forming roller (10) with a certain oscillating travel (7a) over the curved web (5) does not go beyond the length (76) of the curved web (5).

2. Method according to claim 1, **characterised in that** the oscillating travel (7a) of the profiled forming roller (10) corresponds to approximately 80 to 95% of the length (76) of the curved web (5).

3. Method according to claim 1 or 2, **characterised in that** the surface (73) of the formed curved web (5) forms a formed bead (49) which when viewed over the length (76) of the curved web (5) is formed so as to be recessed at least in the middle region of the length (76) of the curved web (5) and is located underneath the surface (71) of the adjoining component (2).

4. Method according to claim 3, **characterised in that** the surfaces (72) of the formed curved web (5) adjoining the adjoining component (2) in the circumferential direction run flush into the surface (71) of the adjoining component (2).

5. Method according to one of claims 1 to 4, **characterised in that** the oscillating force is applied to the workpiece (1, 2, 3) through a clamping tool (17) in which the workpiece (1, 2, 3) is mounted in a form-locking and force-locking manner.

6. Method according to one of claims 1 to 5, **characterised in that** a defined change in the oscillating force in the Z direction (i.e. the turning force with which the oscillating device is driven) is co-ordinated with the contact pressure force in the X direction.

7. Method according to one of claims 1 to 6, **characterised in that** the contact pressure force in the X direction, which the roller head (11) applies to the forming rollers (10), starts with a low contact pressure force when stationary and increases rapidly in the X direction so that the forming roller (10) is initially pressed into the material of the curved web (5) and then the pressure force remains controlled at a constant value during the oscillating movement.

## Revendications

1. Procédé pour réaliser une liaison rivetée refoulée avec un mouvement pendulaire rotatif pour relier deux composants métalliques (1, 2, 3), selon lequel une déformation verticale et en même temps horizontale est réalisée à l'aide de rouleaux de formage (10) et de leur mouvement pendulaire, un composant (3) comporte un rebord courbe préformé (5) en forme de patte plate tandis que l'autre composant (2) présente une fente courbe (4) qui permet de recevoir le rebord courbe préformé (5) en forme de patte plate, et le rouleau de formage (10, grâce à un mouvement pendulaire radial, enfonce le rebord courbe (5) dans la fente courbe (4) à l'aide d'un mouvement combiné axial et rotatif, ce qui réalise une liaison par complémentarité de forme des deux composants (1, 2, 3), **caractérisé en ce que** la circonférence extérieure des rouleaux de formage (10) présente un profil cunéiforme (11, 48), et le mouvement pendulaire (7) de chaque rouleau de formage (10), avec une course pendulaire définie (7a) sur le rebord courbe (5), ne dépasse pas la longueur (76) dudit rebord courbe (5).

2. Procédé selon la revendication 1, **caractérisé en ce que** la course pendulaire (7a) du rouleau de formage profilé (10) correspond à peu près à 80 à 95 % de la longueur (76) du rebord courbe (5).

3. Procédé selon la revendication 1 ou 2, **caractérisé en ce que** la surface (73) du rebord courbe (5) déformé forme un renflement de déformation (49) qui, vu sur la longueur (76) du rebord courbe (5), présente au moins dans la zone centrale de la longueur (76) du rebord courbe (6) une forme creusée et s'étend au-dessous de la surface (71) du composant (2) qui lui fait suite.

4. Procédé selon la revendication 3, **caractérisé en ce que** les surfaces (72) du rebord courbe (5) déformé qui font suite dans le sens circonférentiel au composant (2) voisin se prolongent, dans le même plan, par la surface (71) du composant (2) voisin.

5. Procédé selon l'une des revendications 1 à 4, **caractérisé en ce que** la force pendulaire appliquée sur la pièce (1, 2, 3) est introduite par l'intermédiaire d'un outil de serrage (17) qui reçoit ladite pièce (1, 2, 3) par complémentarité de forme et par force.

6. Procédé selon l'une des revendications 1 à 5, **caractérisé en ce qu'**une variation définie de la force pendulaire dans le sens Z (c'est-à-dire la force de rotation avec laquelle le dispositif pendulaire est entraîné) est coordonnée avec la force de pression dans le sens X.

7. Procédé selon l'une des revendications 1 à 6, **caractérisé en ce que** la force de pression dans le sens X qui agit avec l'extrémité de rouleau (11) sur les rouleaux de formage (10) augmente rapidement à partir d'une faible force de pression à l'arrêt dans le sens X, de sorte que le rouleau de formage (10) est tout d'abord enfoncé dans la matière du rebord courbe (5), puis reste constante de manière régulée pendant le mouvement pendulaire.
